# EUROPÄISCHE PATENTSCHRIFT

(11) **EP 0 378 829 B1**
(45) Veröffentlichungstag und Bekanntmachung des Hinweises auf die Patenterteilung: **20.04.1994**
(21) Anmeldenummer: 89123425.4
(22) Anmeldetag: 19.12.1989
(51) Int. Cl.: B65H 54/54

(54) **Spuleinrichtung zum Aufwickeln von Garn an Spinn- oder Spulmaschinen**
Yarn-winding device for spinners or winders
Bobinoir pour embobiner du fil pour machines à filer

(30) Priorität: 20.01.1989 DE 3901631
(43) Veröffentlichungstag der Anmeldung: 25.07.1990
(73) Patentinhaber: Rieter Ingolstadt Spinnereimaschinenbau AG, 85055 Ingolstadt (DE)
(72) Erfinder: Fahmüller, Maximilian, D-8420 Kelheim (DE)

(56) Entgegenhaltungen:
- CH-A- 570 929
- DE-C- 3 005 327
- GB-A- 2 204 334

## Beschreibung

Die Erfindung betrifft eine Spuleinrichtung gemäß dem Oberbegriff des Anspruchs 1.

Beim Aufwinden von Wickelgut auf von Spulenarmen gehaltenen Hülsen treten insbesondere bei hohen Liefergeschwindigkeiten und Spulendrehzahlen Schwingungen quer zur Drehachse der Spule auf. Diese bewirken einen unruhigen Lauf der Spule, was zur Folge hat, daß sich Unregelmäßigkeiten beim Spulenaufbau ergeben, die für den weiteren Spulvorgang und die Weiterverarbeitung der Spule nachteilig sind.

Eine Spuleinrichtung gemäß dem Oberbegriff des Anspruchs 1 ist aus der GB-A-2 204 334 bekannt. Die dort gezeigten, am Spulenarm angeordneten Bauteile sind fest mit dem Spulenarm verbunden und können sich nicht relativ zu diesem bewegen. Sie bilden lediglich die Halterung eines Reibdämpfers und bewegen sich relativ zum Maschinengestell der Spinnmaschine.

Aus der DE-OS 34 33 082 ist eine Vorrichtung zur Aufnahme von Garnkörpern bekannt, die Schwingungsdämpfer zur Dämpfung von Schwingungen der Garnkörper beim Aufspulen aufweist. Diese besteht aus je einem Reibklotz, der Schwingungen des Wiegenarms infolge Reibung am Tragarm dämpft. Dies hat den Nachteil, daß zusätzliche Mittel seitlich neben den Spularmen der Spuleinrichtung erforderlich sind, an denen die Reibelemente angreifen können. Dies verursacht einen großen Platzbedarf und Bauaufwand für die Spuleinrichtung. Ein weiterer Nachteil ist, daß die Dämpfung in beiden Richtungen der Schwingung erfolgt. Dadurch besteht die Gefahr, daß insbesondere bei leichten Spulen diese von ihrer Antriebsrolle abheben.

Die DE-OS 30 05 327 zeigt einen hydraulisch arbeitenden Dämpfer, der einerseits an dem der Spule abgewandten Ende des Spulenarms, mit der anderen Seite an der Spinnmaschine befestigt ist. Schwingende Bewegungen der Spule sollen damit gedämpft werden. Durch diese Anordnung stehen nur kleine Wegänderungen des schwingenden Spulenarms für die Übertragung an den Dämpfer zur Verfügung. Dadurch ist es nicht möglich, Schwingungen insbesondere bei höheren Spulendrehzahlen wirkungsvoll zu dämpfen. Eine Anordnung des Dämpfers in der Nähe der Spule ergäbe größere Schwingwege, jedoch hätte dies einen hohen Bauaufwand und einen großen Platzbedarf der einzelnen Spulstellen zur Folge.

Aufgabe der Erfindung ist es, eine Spuleinrichtung so auszubilden, daß ein wirkungsvolles Dämpfen der Spule während des Spulvorgangs mit einfachen Mitteln erreicht werden kann.

Die Aufgabe wird erfindungsgemäß durch die Merkmale des Anspruchs 1 gelöst. Weitere vorteilhafte Ausgestaltungen der Erfindung sind in den Unteransprüchen beschrieben.

Die Erfindung wird nachstehend anhand der bei liegenden Zeichnungen beschrieben. Es zeigen:
- Fig. 1: Eine erfindungsgemäße Spuleinrichtung in perspektivischer Darstellung;
- Fig. 2: eine Dämpfungseinrichtung im Schnitt;
- Fig. 3: einen Spulenarm mit einem Betätigungshebel, auf dem ein weiteres Teil zum Verstellen des Schwerpunkt angeordnet ist;
- Fig. 4: einen Spulenarm mit einem Betätigungshebel, der im Schwenkpunkt des Spulhülsenhalters angeordnet ist.
- Fig. 5: einen Spulenarm mit einem Gummiblock
- Fig. 6: eine Spuleinrichtung mit nur einem Spulenarm

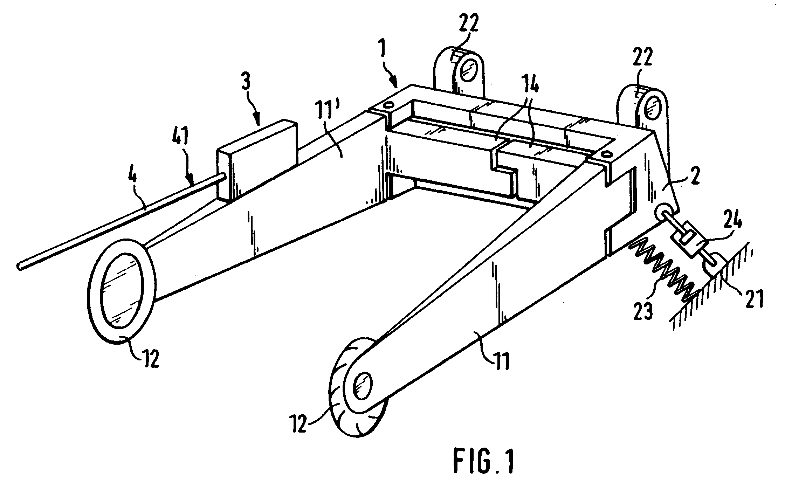

Fig. 1 zeigt eine erfindungsgemäße Spuleinrichtung 1 in perspektivischer Darstellung. Diese besteht aus einem Grundkörper 2 mit zwei Spulenarmen 11 mit je einem Spulenteller 12 zur Aufnahme einer Spulenhülse. Der Grundkörper 2 ist am Maschinengestell 21 über ein Scharnier 22 schwenkbar angeordnet. Die beiden Spulenarme 11 sind durch Verbindungsmittel 14 kinematisch miteinander verbunden. Der Grundkörper 2 ist über ein Federelement 23 und über einen Dämpfer 24 mit dem Maschinengestell 21 verbunden. Das Federelement 23 dient zur Fixierung der Spuleinrichtung in ihren beiden Positionen. In der einen ist die Spule auf der Friktionswalze aufgelegt, in der anderen ist die Spule von dieser abgehoben. Der Dämpfer 24 dient dazu, grobe Schläge und Stöße des während des Aufspulens zu dämpfen und dazu ihn weich auf der Friktionswalze abzusetzen.

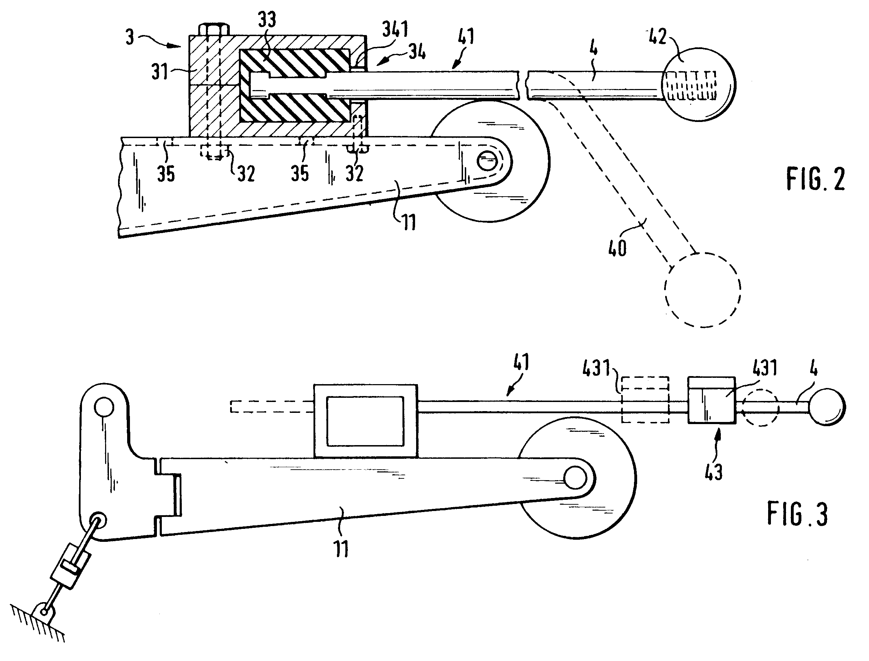

Auf dem Spulenarm 11' ist eine Dämpfungseinrichtung 3 angeordnet. Der Betätigungshebel 4, der gleichzeitig als Schwingmasse 41 dient und zusammen mit einem elastischen Element ein Schwingungssystem bildet, ist somit auch Bestandteil der Dämpfungseinrichtung 3. Der Betätigungshebel 4 hat mehrere Funktionen. Er dient zum Abheben der Spule von einer diese antreibenden Friktionswalze, wobei die Spulenarme quer zur Achse der Spulenhülse 13 um das Scharnier 22 schwenken. Durch ein Betätigen des Hebels 4 in Richtung der Spulenachse von der Spule weg werden die beiden Spulenarme 11 auseinanderbewegt, wodurch eine zwischen den Spulentellern 12 eingesetzte Spulenhülse freigegeben wird. Erfindungsgemäß dient der Betätigungshebel 4 gleichzeitig auch als Schwingmasse 41. Die Schwingmasse 41 vollführt dabei Schwingungen in derselben Ebene wie der Spulenarm. Diese Ebene steht senkrecht auf der Drehachse der Spule. Über die Dämpfungseinrichtung 3 sind der Spulenarm 11 und der Betätigungshebel 4 elastisch und dämpfend miteinander verbunden. Diese Funktionen werden beispielsweise durch gummiartige Materialien gleichzeitig erfüllt (vergl. Fig. 2).

Fig. 2 zeigt eine erfindungsgemäße Vorrichtung mit einer als Betätigungshebel 4 ausgebildeten Schwingmasse 41 und der Dämpfungseinrichtung 3 im Schnitt. Die Schwingmasse ist Teil der Dämpfungseinrichtung. Die Dämpfungseinrichtung 3 besteht weiter aus einem zweiteiligen Gehäuse 31, das mit Befestigungsmitteln 32 auf dem Spulenarm 11 befestigt ist. Der Innenraum des Gehäuses 31 enthält einen parallel zur Ebene des Spulenarmes 11 geteilten Gummiblock 33, der den Betätigungshebel 4 in Aussparungen beider Seiten der Teilungsebene aufnimmt. Der Betätigungshebel kann auch in den Gummiblock eingegossen oder mit ihm verklebt sein. Betätigungshebel 4 und Gummiblock 33 sind so profiliert, daß der Betätigungshebel 4 in axialer Richtung fixiert ist. Durch eine Profilierung in radialer Richtung wird beispielsweise ein abgewinkelter Betätigungshebel 40 zusätzlich gegen Verdrehen gesichert.

Am Austritt 34 des Betätigungshebels 4 aus dem Gehäuse 31, das die Gestalt von zwei Spannbacken besitzt, ist zwischen Gehäuse 31 und Betätigungshebel 4 ausreichend Platz, so daß der Betätigungshebel 4, wenn er infolge Stoß- oder Schwingbewegungen der Spuleinrichtung 1 schwingt, nicht am Gehäuse anschlägt. Beim Öffnen der Spulenarme zum Einsetzen oder Entnehmen einer Hülse oder Spule wird der Betätigungshebel, falls dazu eine entsprechende Kraft erforderlich ist, gegen die Wand der Gehäuses 31 am Austritt 34 gedrückt. Diese bildet dadurch einen Anschlag 341, der die Beweglichkeit des Hebels 4 auf das für das Mitschwingen notwendige Maß beschränkt. Beim Betätigen des Betätigungshebels 4 durch eine automatische Bedienungseinrichtung ist ein fester Anschlag notwendig. Besonders in Bewegungsrichtung parallel zur Spulenachse kann die mögliche Beweglichkeit des Betätigungshebels durch den Anschlag stark eingeschränkt werden, da die für die Dämpfung notwendigen Schwingungen meist in vertikaler Richtung stattfinden.

Über den Handknopf 42 kann die Masse des Betätigungshebels 4 und dessen Schwerpunktlage verändert werden. Dazu wird ein Handknopf 42 mit einer anderen Masse aufgeschraubt. Durch ein axiales Verschieben, z.B. durch ein weiteres Auf- oder Abschrauben des Handknopfes 42 kann die Schwerpunktlage ebenfalls verändert werden.

Fig. 3 zeigt eine Vorrichtung entsprechend Fig. 1 und 2 in der Seitenansicht, bei der auf dem Betätigungshebel 4 ein weiteres Teil 43 angeordnet ist. Dieses ist auf dem Betätigungshebel 4 bewegbar angeordnet und wird über eine nichtgezeigte Klemmvorrichtung an der ihm zugewiesenen Position gehalten. Durch Anfügen von Zusatzgewichten 431 an dem weiteren Teil 43 kann dessen Masse und damit dessen Möglichkeit auf das Schwingverhalten der Dämpfungseinrichtung 3 einzuwirken, ebenso wie durch Verändern der Position des weiteren Teils 43, entsprechend wie beim Handknopf 42, verändert werden.

Eine Veränderbarkeit des Schwingverhaltens der Dämpfungseinrichtung 3 kann auch dadurch erreicht werden, daß die Länge des Betätigungshebels 4 verändert werden kann. Dies beispielsweise dadurch, daß der Betätigungshebel 4 in der Dämpfungseinrichtung 3 verschoben werden kann (Fig. 3).

Eine weitere Möglichkeit der Einwirkung der Schwingmasse 41 auf das Schwingungsverhalten der Spuleinrichtung ist die Position der Dämpfungseinrichtung 3. Dadurch, daß weitere Befestigungspositionen 35 vorgesehen sind (Fig. 2), kann die Position der Dämpfungseinrichtung auf dem Spulenarm 11 verändert werden. Bei einer Ausbildung der zusätzlichen Befestigungspositionen 35 als Langlöcher ist die Position stufenlos verstellbar.

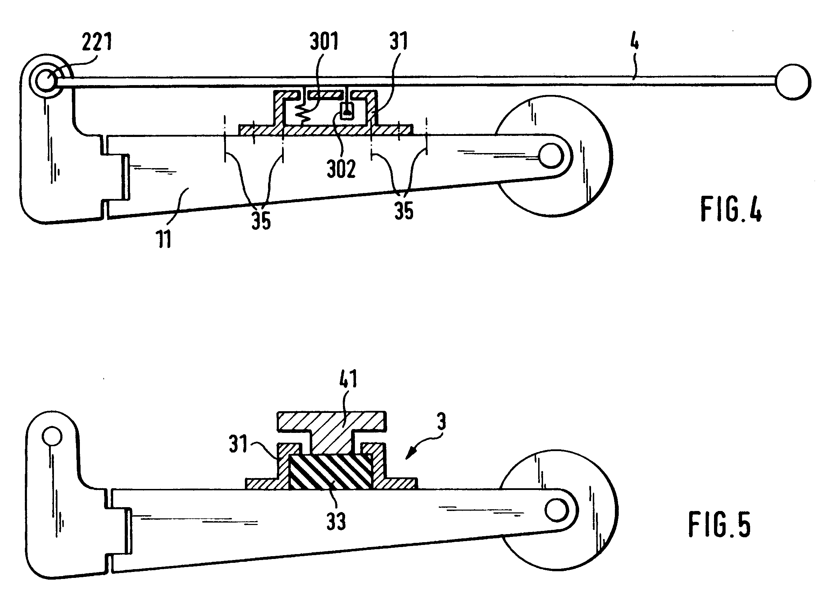

Fig. 4 zeigt einen Spulenarm 11 mit einem Betätigungshebel 4, der in der Schwenkebene der Spuleinrichtung 1 schwenkbar ist und an der Schwenkachse der Spuleinrichtung 1 befestigt ist. Auf dem Spulenarm 11 stützt sich der Betätigungshebel 4 ab. Dabei kann er sich einzeln gegen ein elastisches Element (301), das z.B. als Feder ausgebildet ist und gegen ein dämpfendes Element (302), das z.B. als hydraulisch arbeitender Dämpfer ausgebildet ist, abstützen. Für eine mögliche Befestigung am Maschinengestell außerhalb der Schwenkachse der Spuleinrichtung 1 ist vorzusehen, daß der Betätigungshebel 4 an seiner Abstützung verschiebbar angeordnet ist, um beim Schwenken auftretende Wegunterschiede ausgleichen zu können.

Die Dämpfungseinrichtung 3 beinhaltet als elastisches Element 301 eine Feder und als dämpfendes Element 302 einen hydraulisch arbeitenden Dämpfer, die in einem Gehäuse 31 angeordnet sind, das seinerseits mittels Befestigungsmittel am Spulenarm angeordnet ist. Das Gehäuse 31 kann auf dem Spulenarm verschoben und in anderen Positionen befestigt werden. Dazu sind im Spulenarm 11 zusätzliche Befestigungspositionen 35 vorgesehen. Damit kann die Position der Abstützung des Hebels 4 verändert werden, wodurch das Dämpfungsverhalten der Dämpfungseinrichtung 3 veränderbar ist.

Fig. 5 zeigt eine einfache Ausführung der erfindungsgemäßen Vorrichtung, bei der auf dem Spulenarm 11 eine Dämpfungseinrichtung 3 mit einem Gehäuse 31 und einem Gummiblock 33, angeordnet ist. Das Gehäuse 31 ist als Fassung ausgebildet, die den elastischen Block 33, der hier ein Gummiblock 33 ist, umfaßt und am Spulenarm 11 befestigt. Mit dem Gummiblock 33 ist eine Schwingmasse 41 verbunden. Über ein dämpfendes und ein schwingendes Element, die durch den Gummiblock 33 gleichzeitig dargestellt werden, werden die Schwingungen des Spulenarms 11 und der gesamten Spuleinrichtung 1 an die Schwingmasse 41 übertragen. Diese ist als einfacher Metallklotz ausgebildet, der mit dem Gummiblock 33 z.B. durch Vulkanisieren verbunden ist.

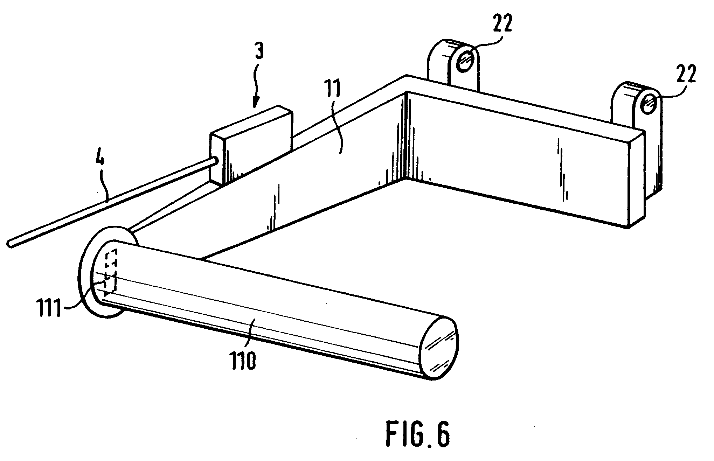

Fig. 6 zeigt eine Spuleinrichtung ähnlich Fig. 1 mit nur einem Spulenarm 11. An diesem ist ein Dorn 110 angebracht, auf dem die Hülse aufgeschoben wird. Für das leichtere Aufbringen der Leerhülse und das leichtere Entfernen der Garnspule ist der Dorn 110 gegenüber dem Spulenarm 11 über das Gelenk 111 schwenkbar. Auf dem Spulenarm 11 ist eine Dämpfungseinrichtung 3 angeordnet. Mit Hilfe des Hebels 4 ist wie bei den anderen gezeigten Ausführungsformen der Spulenarm 11 über die Scharniere 22 schwenkbar, so daß eine auf dem Dorn 110 steckende Hülse auf eine sie antreibende Friktionswalze aufgesetzt und abgehoben werden kann. Schwingungen der Spule quer zu ihrer Drehrichtung werden durch die Dämpfungseinrichtung 3 gedämpft.

In einer einfachen Ausführung, bei der nur eine bestimmte bekannte Schwingung zu neutralisieren ist, kann auf das dämpfende Element verzichtet werden, wenn das schwingende Element, beispielsweise eine Feder, auf die bekannte, die Spuleinrichtung erregende Schwingung zusammen mit der Schwingmasse 41 genau abgestimmt ist.

Es können an einer Spuleinrichtung auch mehrere Dämpfungseinrichtungen angeordnet sein, so z.B. je eines pro Spulenarm, die über die verschiedenen Auslegungen ihrer Federn und Massen auf verschiedene Frequenzen abgestimmt sein können.

## Patentansprüche

1. Spuleinrichtung für das Aufwickeln von Garn an Spinn- und/oder Spulmaschinen mit einem schwenkbar am Maschinengestell angeordneten Spulenarm zum drehbaren Halten von Spulen, dadurch gekennzeichnet, daß am Spulenarm (11) eine als Schwingsystem ausgebildete Dämpfungseinrichtung (3) angeordnet ist, die eine relativ zum Spulenarm (11) bewegliche Masse (41) besitzt.

2. Spuleinrichtung nach Anspruch 1, dadurch gekennzeichnet, daß die Dämpfungseinrichtung (3) ein Schwingsystem aufweist, das Schwingungen in einer Ebene quer zur Spulenachse ausführt.

3. Spuleinrichtung nach Anspruch 1 oder 2, dadurch gekennzeichnet, daß das Schwingsystem aus einer Schwingmasse (41) besteht, die über ein elastisches Element (301) auf dem Spulenarm (11) gelagert ist.

4. Spuleinrichtung nach Anspruch 3, dadurch gekennzeichnet, daß die Dämpfungseinrichtung (3) einen Hebel (4) besitzt, der an seinem freien Ende eine Masse trägt und mit seinem anderen Ende im Drehpunkt (221) des Spulenarms befestigt ist, auf dem er sich über ein elastisches Element (301) abstützt.

5. Spuleinrichtung nach Anspruch 4, dadurch gekennzeichnet, daß der Hebel (4) sich parallel zum elastischen Element (301) über einen Dämpfer (302) abstützt.

6. Spuleinrichtung nach Anspruch 3, dadurch gekennzeichnet, daß die Dämpfungseinrichtung (3) aus einem Hebel (4) besteht, der an seinem einen Ende eine Schwingmasse (42) trägt und an seinem anderen Ende elastisch eingespannt ist und über diese Einspannung am Spulenarm (11) befestigt ist.

7. Spuleinrichtung nach Anspruch 6, dadurch gekennzeichnet, daß die elastische Einspannung aus zwei Spannbacken (31) besteht, welche einen aus Gummi bestehenden elastischen Block (33) umgreifen, in welchem das Ende des Hebels (4) eingebettet ist.

8. Spuleinrichtung nach Anspruch 6 oder 7, dadurch gekennzeichnet, daß der Hebel (4) formschlüssig mit dem elastischen Block (33) verbunden ist.

9. Spuleinrichtung nach einem oder mehreren der Ansprüche 4 bis 8, dadurch gekennzeichnet, daß auf dem Hebel (4) eine Zusatzmasse (431) angebracht ist.

10. Spuleinrichtung nach Anspruch 9, dadurch gekennzeichnet, daß die Zusatzmasse (431) verstellbar angebracht ist.

11. Spuleinrichtung nach einem oder mehreren der Ansprüche 1 bis 10, dadurch gekennzeichnet, daß das elastische Element (301) aus einem Block aus elastischem Material wie z.B. Gummi besteht, der in einer Fassung (31) gehalten und mit dieser auf dem Arm (11) befestigt ist, und daß die Schwingmasse (41) an diesem Block (33) befestigt ist.

12. Spuleinrichtung nach einem oder mehreren der Ansprüche 1 bis 11, dadurch gekennzeichnet, daß am Spulenarm (11) ein Dämpfer (24) angreift, der mit dem Maschinengestell (21) verbunden ist.

13. Spuleinrichtung nach einem oder mehreren der Ansprüche 1 bis 12, dadurch gekennzeichnet, daß die Dämpfungseinrichtung (3) auf dem Spulenarm (11) versetzbar angeordnet ist.

14. Spuleinrichtung nach einem oder mehreren der Ansprüche 4 bis 13, dadurch gekennzeichnet, daß der Hebel (4) in der Dämpfungseinrichtung (3) verschiebbar angeordnet ist.

15. Spuleinrichtung nach Anspruch 4, dadurch gekennzeichnet, daß die Abstützung des Hebels (4) auf dem Spulenarm (11) verschiebbar ausgebildet ist.

16. Vorrichtung nach einem oder mehreren der Ansprüche 4 bis 15, dadurch gekennzeichnet, daß einer oder mehrere Anschläge (341) vorgesehen sind, an die sich der Betätigungshebel (4) beim Öffnen der Spulenarme (11) oder Schwenken der Spuleinrichtung (1) anlegt.

## Claims

1. Winding device for winding yarn on spinning and/or winding machines with a bobbin arm arranged to swivel on the machine frame, for the rotary mounting of bobbins, characterised in that disposed on the bobbin arm (11) is a damping device (3) which is constructed as an oscillating system and has a mass (41) movable relative to the bobbin arm (11).

2. Winding device according to Claim 1, characterised in that the damping device (3) comprises an oscillating system, which carries out oscillations in a plane transversely to the axis of the bobbin.

3. Winding device according to Claim 1 or 2, characterised in that the oscillating system consists of an oscillating mass (41), which is mounted on the bobbin arm (11) by way of a resilient member (301).

4. Winding device according to Claim 3, characterised in that the damping device (3) comprises a lever (4), which at its free end supports a mass and at its other end is attached in the fulcrum (221) of the bobbin arm, on which it is supported by way of a resilient member (301).

5. Winding device according to Claim 4, characterised in that the lever (4) is supported parallel to the resilient member (301) by way of a shock-absorber (302).

6. Winding device according to Claim 3, characterised in that the damping device (3) consists of a lever (4), which at its one end supports an oscillating mass (42) and at its other end is clamped resiliently and by way of this clamping is attached to the bobbin arm (11).

7. Winding device according to Claim 6, characterised in that the resilient clamping consists of two clamping jaws (31), which surround a resilient block (33) consisting of rubber, in which block the end of the lever (4) is embedded.

8. Winding device according to Claim 6 or 7, characterised in that the lever (4) is connected positively to the resilient block (33).

9. Winding device according to one or more of Claims 4 to 8, characterised in that an additional mass (431) is disposed on the lever (4).

10. Winding device according to Claim 9, characterised in that the additional mass (431) is arranged to be adjustable.

11. Winding device according to one or more of Claims 1 to 10, characterised in that the resilient member (301) consists of a block of resilient material, such as for example rubber, which is held in a mounting (31) and is attached with the latter to the arm (11), and that the oscillating mass (41) is attached to this block (33).

12. Winding device according to one or more of Claims 1 to 11, characterised in that engaging on the bobbin arm (11) is a shock-absorber (24), which is connected to the machine frame (21).

13. Winding device according to one or more of Claims 1 to 12, characterised in that the damping device (3) is arranged so that it can be moved on the bobbin arm (11).

14. Winding device according to one or more of Claims 4 to 13, characterised in that the lever (4) is arranged to move in the damping device (3).

15. Winding device according to Claim 4, characterised in that the support of the lever (4) on the bobbin arm (11) is constructed to be displaceable.

16. Apparatus according to one or more of Claims 4 to 15, characterised in that one or more stops (341) are provided, on which the actuating lever (4) bears when the bobbin arms (11) are opened or the winding device (1) is swivelled.

## Revendications

1. Bobinoir (dispositif de bobinage) pour l'embobinage de fils sur des machines à filer et/ou à embobiner, comportant un bras porte-bobines disposé capable de pivoter sur le bâti de machine et destiné à porter des bobines en leur permettant de tourner, bobinoir caractérisé en ce qu'un dispositif (3) amortisseur, réalisé sous forme d'un système oscillant, qui comporte une masse (41) mobile par rapport au bras (11) porte-bobines, est disposé sur le bras (11).

2. Bobinoir selon la revendication 1, caractérisé en ce que le dispositif amortisseur (3) présente un système oscillant qui exécute des oscillations dans un plan perpendiculaire à l'axe des bobines.

3. Bobinoir selon la revendication 1 ou 2, caractérisé en ce que le système oscillant consiste en une masse oscillante (41), qui est montée par l'intermédiaire d'un élément (301) élastique sur le bras (11) porte-bobines.

4. Bobinoir selon la revendication 3, caractérisé en ce que le dispositif amortisseur (3) comporte un levier (4), qui porte à son extrémité libre une masse et qui est fixé par son autre extrémité au point (221) de rotation du bras porte-bobines, sur lequel il s'appuie par l'intermédiaire d'un élément (301) élastique.

5. Bobinoir selon la revendication 4, caractérisé en ce que le levier (4) s'appuie, parallèlement à l'élément (301) élastique, par l'intermédiaire d'un organe (302) amortisseur.

6. Bobinoir selon la revendication 3, caractérisé en ce que le dispositif amortisseur (3) consiste en un levier (4), qui porte à une extrémité une masse (42) oscillante et est serré élastiquement à son autre extrémité et est fixé par l'intermédiaire de cet organe de serrage au bras (11) porte-bobines.

7. Bobinoir selon la revendication 6, caractérisé en ce que le dispositif de serrage élastique consiste en deux mâchoires (31), qui entourent un bloc (33) élastique consistant en du caoutchouc et dans lequel l'extrémité du levier (4) est enfouie.

8. Bobinoir selon la revendication 6 ou 7, caractérisé en ce que le levier (4) est relié au bloc (33) élastique par serrage par conformation.

9. Bobinoir selon l'une ou plusieurs des revendications 4 à 8, caractérisé en ce qu'une masse (431) supplémentaire est montée et appliquée sur le levier (4).

10. Bobinoir selon la revendication 9, caractérisé en ce que la masse (431) supplémentaire est montée déplaçable.

11. Bobinoir selon une ou plusieurs des revendications 1 à 10, caractérisé en ce que l'élément (301) élastique consiste en un bloc en une matière élastique comme par exemple du caoutchouc, qui est maintenu dans un châssis-support (31) et est fixé avec celui-ci au bras (11), et en ce que la masse (41) oscillante est fixée à ce bloc (33).

12. Bobinoir selon une ou plusieurs des revendications 1 à 11, caractérisé en ce qu'un amortisseur (24) est en prise avec le bras (11) porte-bobines et est relié au bâti (21) de la machine.

13. Bobinoir selon l'une ou plusieurs des revendications 1 à 12, caractérisé en ce que le dispositif (3) amortisseur est monté réglable sur le bras (11) porte-bobines.

14. Bobinoir selon l'une ou plusieurs des revendications 4 à 13, caractérisé en ce que le levier (4) est monté, de façon à pouvoir coulisser, dans le dispositif amortisseur (3).

15. Bobinoir selon la revendication 4, caractérisé en ce que l'appui du levier (4) sur le bras (11) porte-bobines est réalisé coulissant.

16. Dispositif selon une ou plusieurs des revendications 4 à 15, caractérisé en ce qu'une ou plusieurs butées (341) sont prévues, sur lesquelles le levier (4) d'actionnement s'appuie lors de l'ouverture des bras (11) porte-bobines ou lors d'un pivotement du bobinoir (1).
